# EUROPÄISCHE PATENTSCHRIFT

(11) **EP 0 756 526 B1**
(45) Veröffentlichungstag und Bekanntmachung des Hinweises auf die Patenterteilung: **08.10.1997**
(21) Anmeldenummer: 95915750.4
(22) Anmeldetag: 06.04.1995
(51) Int. Cl.: B21D 11/20

(54) **SCHALENFÖRMIGES WERKSTÜCK**
SHELL-SHAPED WORKPIECE
PIECE EN FORME GENERALE DE COQUE

(30) Priorität: 19.04.1994 DE 4413369
(43) Veröffentlichungstag der Anmeldung: 05.02.1997
(73) Patentinhaber: HORNAUER, Klaus-Peter, D-52072 Aachen (DE)
(72) Erfinder: HORNAUER, Klaus-Peter, D-52072 Aachen (DE)
(74) Vertreter: König, Werner, Dipl.-Ing.
(86) Internationale Anmeldenummer: DE9500466
(87) Internationale Veröffentlichungsnummer: WO9528241

(56) Entgegenhaltungen:
- AT-B- 363 762
- DE-A- 3 808 763
- US-A- 4 236 399

## Beschreibung

Die Erfindung betrifft ein schalenförmiges Werkstück, das mit im wesentlichen normal zu seiner Fläche verlaufenden, mit dieser Fläche biegesteif verbundenen biegesteifen Vorsprüngen versehen ist.

Solche Werkstücke können zur Herstellung von Bauteilen mit gekrümmter Oberfläche dienen, wobei sie insbesondere bei Bauteilen mit größeren Abmessungen, wie z.B. Flügel von Luftfahrzeugen, Treibstofftanks oder die Beplankungen der Zellen von Luft- oder Schienenfahrzeugen, eingesetzt werden. Die gekrümmte Bauteiloberfläche setzt sich dabei zumeist aus den entsprechend gekrümmten Flächen mehrerer Werkstücke zusammen. Es können aber auch Bauteile, wie z.B. ein Stück der Beplankung einer Flugzeugzelle, aus einem einzigen Werkstück hergestellt sein.

Es ist bekannt, ein zunächst plattenförmiges Werkstück so zu formen, daß es die gewünschte gekrümmte Form aufweist ("Luftfahrtforschung und Luftfahrttechnologie", 2. BMFT-Status Seminar 1980, Seite 112-127).

Für diesen Umformvorgang am Werkstück werden diverse Techniken angewandt. So kann die Umformung dadurch erreicht werden, daß das Werkstück durch Einwirken mechanischer Kräfte aus seiner Ursprungsform direkt in die gewünschte Endform gebracht wird (z.B. DE 38 087 63 C 2). Hierbei wird das Werkstück zumindest teilweise im plastischen Bereich umgeformt, damit es ohne weitere Krafteinwirkung die Endform dauerhaft aufrechterhalten kann.

Eine Umformung kann aber auch in zwei Schritten erfolgen, wobei im ersten Schritt das Werkstück durch unterschiedliche Methoden zunächst in eine Ausgangsform vorgespannt wird. Der zweite Behandlungsschritt kann nun daraus bestehen, diese Ausgangsform zu fixieren und damit zur Endform zu machen, indem die durch das Vorspannen im Material erzeugten Spannungen abgebaut werden. Beispielhaft dafür ist das "age forming" ("Age Forming Integrally Stiffened, Aluminum Aerospace Structures in an Autoclave", H. Brewer in AIAA/AHS/ASTE Aircraft Design, Systems and Operations Conference in Seattle, WA; 31.07.-02.08.1989), wobei die Spannungsrelaxation durch Temperatureinwirkung herbeigeführt wird. Die Spannungsfreiheit kann den Vorteil haben, daß das umgeformte Werkstück weniger anfällig für Materialschäden wie z.B. Rissbildung ist.

Die durch Vorspannen erreichte Ausgangsform kann aber auch durch einen weiteren Umformprozeß in seine Endform gebracht werden, wobei das Werkstück zumindest teilweise in seinem plastischen Bereich verändert werden muß, damit die erreichte Endform erhalten bleibt. Hierfür ist das Kugelstrahlumformen (DE 38 42 064 C 2) beispielhaft, das zur Herstellung von Bauteiloberflächen mit einer oder auch mit mehr als einer Krümmungsachse, z.B. mit spharischer Krümmung, angewandt wird.

Die in den obigen Beispielen genannten Bauteile mit gekrümmten Oberflächen müssen ein Mindestmaß an Festigkeit aufweisen, weshalb in der Regel bei den entsprechenden Werkstücken Maßnahmen zur Versteifung vorgesehen sind. Aus der DE-A-38 08 763, die dem Oberbegriff des Anspruchs 1 entspricht, sind als Paneele ausgebildete Werkstücke bekannt, die als Versteifungen rippenartige Vorsprünge aufweisen. Diese Vorsprünge werden dort als Stringer und Rippengurte bezeichnet, wobei die Rippengurte mit den Stringern überkreuz laufen. Zur Umformung eines solchen Werkstückes ist es wegen dieser Geometrie unvermeidlich, daß zumindest einige der Versteifungen in Teilbereichen gestaucht oder gestreckt werden, wobei die Stauchungen bzw. Streckungen im plastischen Bereich des Werkstückmaterials erfolgen.

Die zuletzt beschriebenen Werkstücke haben den Nachteil, daß zum einen die Herstellung eines Werkstückes mit sich überkreuzenden Versteifungen recht aufwendig ist und daß zum anderen der für eine Umformung notwendige Kraftaufwand hoch ist.

Der vorliegenden Erfindung liegt die Aufgabe zugrunde, ein Werkstück der eingangs erwähnten Art bereitzustellen, das relativ einfach und kostengünstig herzustellen sowie leicht umzuformen ist und gleichzeitig eine hohe Steifigkeit aufweist.

Diese Aufgabe wird bei einem Werkstück der eingangs erwähnten Art erfindungsgemäß dadurch gelöst, daß jeweils zwei Vorsprünge durch mindestens ein biegesteifes, mit Abstand zur Fläche verlaufendes und in seiner Höhe den Abstand der Vorsprünge bestimmendes Spannelement verbunden sind.

Ein solches Spannelement bewirkt, daß zumindest in Höhe dieses Spannelements der Abstand der mit dem Spannelement verbundenen Vorsprünge zueinander konstant gehalten wird, wodurch die Spannelemente somit für das Werkstück versteifend, d.h formerhaltend wirken. Die Spannelemente können durch diese Versteifungsfunktion andere Versteifungselemente, wie z.B. die oben im Stand der Technik erwähnten mit den Stringern überkreuz laufenden Rippengurte, ersetzen. Man könnte demnach allein mit parallel laufenden Stringern auskommen, zwischen denen dann die Spannelemente angebracht sind. Ein Werkstück mit lediglich parallel zueinander verlaufenden Versteifungsrippen kann in der Herstellung einfacher und damit kostengünstiger sein. Da zudem die Spannelemente mit einer geringeren Materialmenge auskommen als die durch sie ersetzten Versteifungsrippen, hat dies eine Gewichtsreduktion des Werkstückes zur Folge, was sich besonders im Luftfahrzeugbau als Vorteil erweist.

Es ist möglich, die Spannelemente erst nach einer Umformung des restlichen Werkstückes anzubringen. Hierdurch können Umformungen im rein elastischen Bereich getätigt werden, wobei die neue Form des Werkstückes durch die nachträglich angebrachten Spannelemente aufrecht erhalten werden kann. Aufgrund der damit möglichen Vermeidung plastischer Veränderungen am Werkstück kann außerdem eine Umformung mit wesentlich geringeren Kräften durchgeführt werden.

Des weiteren kann das erfindungsgemäße schalenförmige Werkstück so ausgeführt sein, daß mindestens eines der Spannelemente in seiner Länge veränderbar ist.

Hierdurch wird erreicht, daß die Umformung oder auch das Vorspannen eines Werkstückes auf einfache Weise mit Hilfe der Spannelemente durchgeführt werden kann. Eine Änderung der Lange der Spannelemente verändert gleichzeitig auf Höhe der Spannelemente den Abstand zwischen den mit den Spannelementen verbundenen Vorsprüngen. Da die biegesteifen Vorsprünge auch biegesteif mit der Fläche des Werkstückes verbunden sind, bewirkt die auf Höhe der Spannelemente erfolgte Abstandsänderung der Vorsprünge eine Krümmung dieser Fläche.

Desweiteren kann das erfindungsgemäße schalenförmige Werkstück so ausgebildet sein, daß mindestens eines der Spannelemente mit mindestens einem Vorsprung formschlüssig verbunden ist.

Hierdurch wird erreicht, daß ein Spannelement sowohl bei seiner Verlängerung als auch bei seiner Verkürzung zwischen den damit verbundenen Vorsprüngen in Höhe des Spannelements eine entsprechende Abstandsänderung bewirkt.

Das erfindungsgemäße schalenförmige Werkstück kann auch so ausgeführt sein, daß das Spannelement zur Längenveränderung mindestens eine Schraubverbindung aufweist.

Hierdurch ist es möglich, Abstandsveränderungen zwischen zwei Vorsprüngen durch einfache Drehbewegungen am Spannelement zu erreichen. Diese Drehbewegungen können von Hand oder motorisch ausgeführt werden.

Weiterhin kann das erfindungsgemäße schalenförmige Werkstück so ausgebildet sein, daß die Vorsprünge im wesentlichen parallel zueinander verlaufende Versteifungen sind.

Diese Ausführungsform ermöglicht dann Umformungen mit besonders geringem Kraftaufwand, wenn die einzige Krümmungsachse der Umformung parallel zu den Versteifungen verläuft, so daß lediglich die elastischen oder plastischen Widerstandskräfte des Flächenelementes der Umformkraft entgegenwirken und nicht die der Versteifungen.

Schließlich kann das erfindungsgemäße schalenförmige Werkstück so ausgeführt sein, daß mindestens eines der Spannelemente zur Längenänderung extern ansteuerbar ist.

Eine externe Ansteuerbarkeit der Spannelemente ermöglicht es, die Form des Werkstückes flexibel zu gestalten. Die Form eines aus solchen Werkstücken bestehenden Bauteils kann also mittels im Bauteil angebrachter, von außen steuerbarer Motoren und dazugehörender, die Länge der Spannelemente verändernder Hilfsmittel bei Bedarf an sich ändernde Anforderungen oder Bedingungen angepaßt werden. Eine beispielhafte Möglichkeit für die Anwendung extern ansteuerbarer Spannelemente an einem Bauteil mit gekrümmter Oberfläche ist durch einen Flugzeugflügel gegeben: Vom Cockpit eines Flugzeuges aus könnte mit Hilfe der Spannelemente je nach Flugmanöver die Form des Flügels geändert werden. Somit ließe sich gegebenenfalls ein völlig neuer und vereinfachter Aufbau eines Flugzeugflügels, z. B. ohne separate Landeklappen, realisieren.

Im folgenden wird ein Ausführungsbeispiel der Erfindung anhand von Figuren dargestellt.

Es zeigen
Fig.1: in schematischer Darstellung einen Teil eines schalenförmigen Werkstückes mit parallelen Versteifungen und dazu senkrecht verlaufenden Spannelementen,
Fig.2: einen Teil eines schalenförmigen Werkstückes gemäß Fig. 1 mit gekrümmtem Flächenelement und
Fig.3: einen vergrößerten Ausschnitt aus einem schalenförmigen Werkstück gemäß Fig. 1 mit detaillierter Darstellung eines Spannelementes.

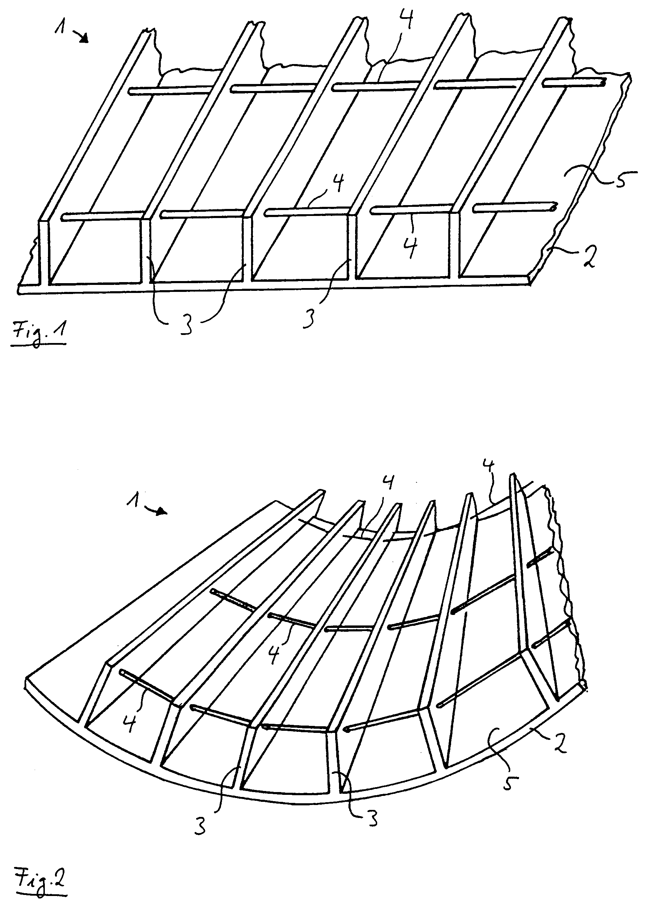

Fig.1 zeigt schematisch eine Schrägaufsicht auf einen Teil eines schalenförmigen Werkstückes 1. Die in dieser Darstellung nicht sichtbare Außenfläche des Flächenelementes 2 ist eben. Senkrecht zum Flächenelement 2 und mit diesem biegesteif verbunden verlaufen parallel zueinander biegesteife rippenartige Vorsprünge 3. Jeweils zwei Vorsprünge 3 sind durch Spannelemente 4 miteinander verbunden.

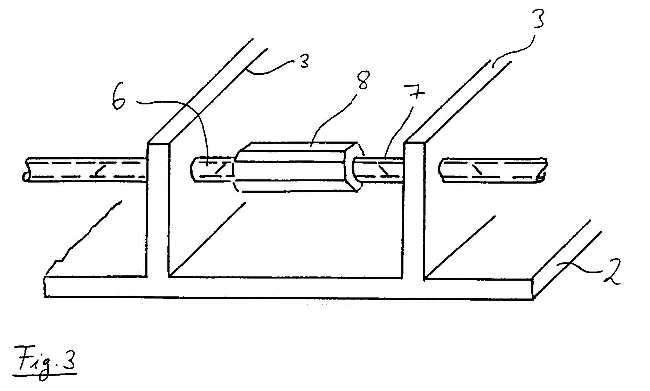

Verkürzt man nun die Längen der Spannelemente 4, so verringert sich in Höhe der Spannelemente 4 der Abstand zwischen zwei benachbarten Vorsprüngen 3 entsprechend. Da gleichzeitig auf der Innenfläche 5 des Flächenelementes 2 der Abstand zwischen zwei Vorsprüngen 3 fixiert ist, kommt es aufgrund der Biegesteifigkeit der Spannelemente 4 und ihrer Verbindung zum Flächenelement 2 zu einer Krümmung des Flächenelementes 2, wie sie in Fig. 2 dargestellt ist. Eine Verlängerung der Spannelemente 4 ergibt eine entsprechende Krümmung des Flächenelementes 2 mit umgekehrtem Vorzeichen.

Da die Vorsprünge 3 in dem in Fig. 2 dargestellten Fall parallel zur Achse der Krümmung verlaufen, muß zur Verkürzung der Spannelemente 4, d.h. zur Umformung des Werkstückes 1 lediglich die elastische bzw. plastische Widerstandskraft des Flächenelementes 2 überwunden werden.

Wird die verkürzte Länge der Spannelemente 4 fixiert, wird dadurch die Krümmung des Flächenelementes 2 auch dann beibehalten, wenn die Umformung im rein elastischen oder im teilelastischen Bereich erfolgt ist.

Fig. 3 zeigt eine mögliche Ausführungsform eines in seiner Länge veränderbaren Spannelementes 4. Ein Spannelement 4 besteht hier aus zwei Gewindestangen 6,7, wobei an einem Vorsprung 3 eine Gewindestange mit Rechtsgewinde 6 und am benachbarten Vorsprung 3 gegenüberliegend eine Gewindestange mit Linksgewinde formschlüssig fixiert ist. Diese beiden Gewindestangen 6,7 werden durch ein Verbindungsstück 8 miteinander verbunden, wobei dieses Verbindungsstück 8 die den Gewindestangen 6, 7 entsprechenden Gewindebohrungen aufweist.

Dreht man nun das Verbindungsstück in eine bestimmte Richtung, so werden der Drehrichtung und der Gewindeorientierung entsprechend die Gewindestangen 6,7 und damit in Höhe der Gewindestangen 6,7 die benachbarten Vorsprünge 3 aufeinander zu oder voneinander weg bewegt, was in der Folge eine Krümmung des Flächenelementes 2 bewirkt.

### Bezugszeichenliste

- 1: schalenförmiges Werkstück
- 2: Flächenelement
- 3: Vorsprung
- 4: Spannelement
- 5: Innenfläche
- 6: Gewindestange mit Rechtsgewinde
- 7: Gewindestange mit Linksgewinde
- 8: Verbindungsstück

## Patentansprüche

1. Schalenförmiges Werkstück (1), das mit im wesentlichen normal zu seiner Fläche (2) verlaufenden, mit dieser Fläche (2) biegesteif verbundenen biegesteifen Vorsprüngen (3) versehen ist, dadurch gekennzeichnet, daß jeweils zwei Vorsprünge (3) durch mindestens ein biegesteifes, mit Abstand zur Fläche (2) verlaufendes und in seiner Höhe den Abstand der Vorsprünge (3) bestimmendes Spannelement (4) verbunden sind.

2. Werkstück nach Anspruch 1, dadurch gekennzeichnet, daß mindestens eines der Spannelemente (4) in seiner Länge veränderbar ist.

3. Werkstück nach Anspruch 1 oder 2, dadurch gekennzeichnet, daß mindestens eines der Spannelemente (4) mit mindestens einem Vorsprung (3) formschlüssig verbunden ist.

4. Werkstück nach einem der vorherigen Ansprüche, dadurch gekennzeichnet, daß das Spannelement (4) zur Längenveränderung mindestens eine Schraubverbindung (8) aufweist.

5. Werkstück nach einem der vorherigen Ansprüche, dadurch gekennzeichnet, daß die Vorsprünge (3) im wesentlichen parallel zueinander verlaufende Versteifungen sind.

6. Werkstück nach einem der vorherigen Ansprüche, dadurch gekennzeichnet, daß mindestens eines der Spannelemente (4) zur Längenänderung extern ansteuerbar ist.

## Claims

1. Shell-shaped workpiece (1) which is provided with rigid projections (3) which run essentially perpendicular to the surface (2) of the workpiece and are rigidly connected to the said surface (2), characterized in that two projections (3) are connected in each case by at least one rigid stressing element (4) which extends with spacing from the surface (2) and, in its height, determines the spacing of the projections (3).

2. Workpiece according to Claim 1, characterized in that at least one of the stressing elements (4) is variable in its length.

3. Workpiece according to Claim 1 or 2, characterized in that at least one of the stressing elements (4) is connected in a positive-locking manner to at least one projection (3).

4. Workpiece according to any of the preceding claims, characterized in that the stressing element (4) has at least one screw connection (8) to change its length.

5. Workpiece according to any of the preceding claims, characterized in that the projections (3) are reinforcements which run essentially parallel to one another.

6. Workpiece according to any of the preceding claims, characterized in that at least one of the stressing elements (4) can be controlled externally to change its length.

## Revendications

1. Pièce en forme de coque (1) munie de parties en saillie (3) rigides qui s'étendent essentiellement perpendiculairement par rapport à sa surface (2) et qui sont reliées de manière rigide à cette surface (2), caractérisée par le fait que deux parties en saille (3) sont à chaque fois reliées par au moins un élément tendeur (4) rigide s'étendant à une certaine distance de la surface (2) et définissant à son niveau l'écart entre les pièces en saillie (3).

2. Pièce selon la revendication 1, caractérisée par le fait qu'au moins l'un des éléments tendeurs (4) est modifiable dans sa longueur.

3. Pièce selon la revendication 1 ou 2, caractérisée par le fait qu'au moins l'un des éléments tendeurs (4) est relié mécaniquement avec au moins l'une des parties en saillie (3).

4. Pièce selon l'une des revendications précédentes, caractérisée par le fait que l'élément tendeur (4) présente au moins une liaison vissée (8) pour modifier sa longueur.

5. Pièce selon l'une des revendications précédentes, caractérisée par le fait que les parties en saillie (3) sont des renforts s'étendant essentiellement en parallèle les uns par rapport aux autres.

6. Pièce selon l'une des revendications précédentes, caractérisée par le fait qu'au moins l'un des éléments tendeurs (4) peut être commandé de l'extérieur en vue de modifier sa longueur.
